# EUROPÄISCHE PATENTANMELDUNG

(11) **EP 2 012 417 A1**
(43) Veröffentlichungstag der Anmeldung: **07.01.2009**
(21) Anmeldenummer: 08405018.6
(22) Anmeldetag: 17.01.2008
(51) Int. Cl.: H02M 3/335, H02M 1/42, H02M 1/34

(54) **Stromversorgung mit grossem Eingangsspannungsbereich**

(71) Anmelder: Belimo Holding AG, 8340 Hinwil (CH)
(72) Erfinder: Walter Gutmann, 8607 Aathal-Seegräben (CH)
(74) Vertreter: Vogel, Dany

(57) **Zusammenfassung**

Eine Stromversorgung (1) für Antriebe (2), welche einen ausgedehnten Eingangsspannungsbereich aufweist, umfasst ein Gleichrichtermodul (G1) mit nachgeschaltetem Eingangskondensator (C5), sowie einen Current-Mode PWM-Regler (IC). Der Regler (IC) umfasst eine extern beschaltbare Oszillatorschaltung (I0) zur Erzeugung einer Oszillatorspannung, welche die Taktfrequenz bestimmt, mit welcher die Strompulse getaktet werden, sowie einen Eingang (I3) für ein Messsignal eines Strompulses. Der Eingangskondensator (C5) ist so bemessen, dass bei einer Speisung der Stromversorgung (1) mit einer Wechselspannung, über dem Eingangskondensator (C5) eine mit der doppelten Frequenz der Wechselspannung pulsierende ungeglättete Gleichspannung anliegt. Der Regler (IC) ist so beschaltet, dass die Taktfrequenz wesentlich höher als die Frequenz der Wechselspannung ist, und dass die Oszillatorspannung dem Messsignal des Strompulses aufmoduliert wird. Dadurch wird erreicht, dass die Strompulse mit der innerhalb einer Periodendauer ansteigenden Spannung am Eingangskondensator (C5) grösser werden, respektive mit der innerhalb der Periodendauer sinkenden Spannung am Eingangskondensator (C5) wieder kleiner werden, so dass eine sinusförmige Stromaufnahme durch die Stromspeisung bewirkt wird, was die Verwendung von kleiner dimensionierten Speisetransformatoren ermöglicht.

## Beschreibung

### Technisches Gebiet

Die vorliegende Erfindung betrifft eine Stromversorgung mit einem grossen Eingangsspannungsbereich, für Antriebe, insbesondere für Klappenantriebe. Die vorliegende Erfindung betrifft insbesondere eine Stromversorgung mit einem ausgedehnten Eingangsspannungsbereich, welche ein Eingangsfilter mit nachgeschaltetem Gleichrichtermodul, ein dem Gleichrichtermodul nachgeschalteter Eingangskondensator, und ein Current-Mode PWM-Regler (Stromstellregler basierend auf Pulsweitenmodulation oder Puls Width Modulation) umfasst.

### Stand der Technik

Um Antriebe für die Lüftungs- und Klimatechnik, insbesondere Klappenantriebe, in verschiedenen Anwendungsgebieten mit unterschiedlichen verfügbaren Speisespannungen anbieten zu können, müssen typischerweise mehrere Steuerelektroniken, die eine spezifisch ausgerichtete Stromspeisungen (Stromspeisevorrichtungen) enthalten, hergestellt und gelagert werden, was zu Lagerkosten und wegen den unterschiedlichen Bauweisen und den jeweils reduzierten Stückzahlen zu erhöhten Herstellungskosten führt.

In der Patentanmeldung EP 1 633 028 wird eine Stromspeisung mit grossem Eingangsspannungsbereich für Klappenantriebe beschrieben. Die Stromspeisung nach EP 1 633 028 umfasst neben einem Eingangsfilter und einer Diodenbrücke eine Verstärkungsstufe zur Erhöhung der Spannung und eine Anordnung mit mehreren Glättungskondensatoren, beispielsweise sechs Kondensatoren mit jeweils 560µF zur Glättung der gleichgerichteten Eingangspannung. Da die Kondensatoren beim Einschalten zunächst geladen werden müssen, wird kurzzeitig ein erhöhter Strom aufgenommen. Dieser Einschaltstossstrom kann zu einer kurzzeitigen Überlastung der Einschaltkontakte und damit zu einer Verkürzung derer Kontaktlebensdauer führen. Überdies benötigt die Anordnung der sechs gross dimensionierten Glättungskondensatoren ein beachtliches Volumen, was für eine kompakte Bauform der Stromspeisung hinderlich ist.

### Darstellung der Erfindung

Es ist eine Aufgabe der vorliegenden Erfindung eine Stromversorgung mit einem grossen Eingangsspannungsbereich vorzuschlagen, welche für Antriebe, insbesondere für Klappenantriebe, geeignet ist und mindestens gewisse Nachteile des Stands der Technik nicht aufweist. Ein grosser Eingangsspannungsbereich ist ein ausgedehnter Eingangsspannungsbereich von beispielsweise 24V bis 240V Wechselspannung. Es ist insbesondere eine Aufgabe der vorliegenden Erfindung eine Stromversorgungsvorrichtung mit einem ausgedehnten Eingangsspannungsbereich für Antriebe vorzuschlagen, welche gegenüber dem Stand der Technik eine kompaktere Bauweise aufweist und reduzierte Einschaltströme verursacht.

Gemäss der vorliegenden Erfindung werden diese Ziele insbesondere durch die Elemente der unabhängigen Ansprüche erreicht. Weitere vorteilhafte Ausführungsformen gehen ausserdem aus den abhängigen Ansprüchen und der Beschreibung hervor.

Die Stromversorgung mit ausgedehntem Eingangsspannungsbereich, für Antriebe, insbesondere für Klappenantriebe, umfasst ein Eingansfilter, z.B. ein RLC-Eingangsfilter, mit nachgeschaltetem Gleichrichtermodul, z.B. eine Diodengleichrichterbrücke, ein dem Gleichrichtermodul nachgeschalteter Eingangskondensator, und ein Current-Mode PWM-Regler. Der Current-Mode PWM-Regler umfasst einen Ausgang für ein Taktsignal zum Takten von Strompulsen, eine extern beschaltbare Oszillatorschaltung zur Erzeugung einer die Taktfrequenz bestimmenden Oszillatorspannung, sowie einen Eingang für ein Messsignal eines Strompulses.

Die oben genannten Ziele werden durch die vorliegende Erfindung insbesondere dadurch erreicht, dass der Eingangskondensator so bemessen ist, dass bei einer Speisung der Stromversorgung mit einer Wechselspannung, über dem Eingangskondensator eine mit der doppelten Frequenz der Wechselspannung pulsierende ungeglättete Gleichspannung anliegt, und dass der Regler so beschaltet ist, dass die Taktfrequenz wesentlich höher als die Frequenz der Wechselspannung ist, und dass die Oszillatorspannung dem Messsignal des Strompulses aufmoduliert wird. Die Frequenz der Wechselspannung beträgt beispielsweise 50Hz oder 60Hz, wohingegen die Taktfrequenz beispielsweise 80kHz beträgt. Der Eingangskondensator ist zudem vorzugsweise so bemessen, dass er die Strompulse liefert, ohne dass die Spannung über dem Eingangskondensator dabei wesentlich einbricht. Der Eingangskondensator ist beispielsweise ein Folienkondensator und weist einen Wert im Bereich von 100nF bis 1000nF auf, z.B. 330nF oder 470nF. Durch die kleine Dimensionierung des dem Gleichrichtermodul nachgeschalteten Eingangskondensators kann die Baugrösse der Stromspeisung gegenüber dem Stand der Technik kompakter ausgeführt werden. Zudem ergibt sich aus der kleinen Dimensionierung die ungeglättete Gleichspannung, welche mit der doppelten Frequenz der eingangsseitigen Wechselspannung pulsiert. Durch die Überlagerung der Oszillatorspannung auf das Messsignal des Strompulses wird erreicht, dass der Strompuls mit der innerhalb einer Periodendauer ansteigenden Spannung am Eingangskondensator grösser wird, respektive mit der innerhalb der Periodendauer sinkenden Spannung am Eingangskondensator wieder kleiner wird. Durch diese sinusförmig grösser und kleiner werdenden Strompulse wird eine sinusförmige Stromaufnahme durch die Stromspeisung bewirkt. Die von einem Gerät aufgenommene Scheinleistung ist für die Dimensionierung des Speisetransformators massgebend. Die Scheinleistungsaufnahme eines Gerätes ist im Verhältnis zur benötigten Wirkleistung umso grösser, je mehr die Form des aufgenommenen Stroms von der idealen Sinusform abweicht. Deshalb ermöglicht die durch die kleine Dimensionierung des Eingangskondensators und durch die Überlagerung der Oszillatorspannung auf das Messsignal des Strompulses bewirkte nahe bei der idealen Sinusform liegende Stromaufnahme der Stromspeisung die Verwendung von Speisetransformatoren mit einer im Vergleich zum Stand der Technik geringeren Grösse.

In einer Ausführungsvariante umfasst die Stromversorgung ein aus einem Kondensator bestehendes Snubberglied. Die Stromversorgung umfasst einen durch das Taktsignal geschalteten Schalter, der mit einem Übertrager so verbunden ist, dass jeweils beim Einschalten des Schalters im Übertrager primärseitig einer der Strompulse erzeugt wird. Der Kondensator des Snubberglieds ist primärseitig und sekundärseitig mit dem Übertrager verbunden. Das Snubberglied hat den Vorteil, dass die Energie, die üblicherweise in der Snubberschaltung "verheizt" wird, von der Primärseite des Übertragers auf die Sekundärseite des Übertragers und damit zum Ausgang der Stromspeisung übertragen wird.

Vorzugsweise weist die Stromversorgung eine bedämpfte Spannungsrückkopplungsschaltung von der Ausgangsspannung der Stromversorgung zum Regler auf, wobei die Spannungsrückkopplungsschaltung ausgangsseitig mit einer Spannungsbegrenzung beschaltet ist. Die bedämpfte Spannungsrückkopplungsschaltung bewirkt zusammen mit der kleinen Dimensionierung des Eingangskondensators und der Überlagerung der Oszillatorspannung auf das Messsignal des Strompulses die Annäherung der Stromaufnahme der Stromspeisung an die ideale Sinusform. Die Spannungsbegrenzung begrenzt ein Überschwingen der Sekundärspannung am Ausgang der Stromspeisung. Die Ausgangsspannung der Stromversorgung ist beispielsweise eine definierte Gleichspannung im Bereich von 10V bis 30V, z.B. 21.5V.

Vorzugsweise ist die Stromversorgung als Sperrwandler aufgebaut und die Masse der Ausgangspannung der Stromversorgung ist mit der Masse des Reglers verbunden. Dadurch, dass bei der Sperrwandlerschaltung die Massen des Reglers und der Sekundärspannung miteinander verbunden werden können, werden die Spannungsrückkopplungsschaltung und die Speisung des PWM-Reglers im Betrieb vereinfacht.

Vorzugsweise ist über die Ausgangspannung der Stromversorgung ein Speicherkondensator geschaltet. Da auf der Eingangsseite kein Speicherkondensator zur Glättung der gleichgerichteten Spannung angeordnet ist, verhindert dieser Speicherkondensator, dass auf der Sekundärseite zu grosse Spannungseinbrüche auftreten.

Neben der Stromspeisung bezieht sich die vorliegende Erfindung zudem auf einen Antrieb, insbesondere ein Klappenantrieb, mit einer erfindungsgemässen Stromversorgung.

### Kurze Beschreibung der Zeichnungen

Nachfolgend wird eine Ausführung der vorliegenden Erfindung anhand eines Beispieles beschrieben. Das Beispiel der Ausführung wird durch die folgenden beigelegten Figuren illustriert:
Figur 1 zeigt ein Blockdiagramm, welches schematisch eine Stromversorgung mit ausgedehntem Eingangsspannungsbereich illustriert, welche einen Current-Mode PWM-Regler (PWM-Stromstellregler) umfasst und mit einem Antrieb verbunden ist.
Figur 2 zeigt ein Schaltungsdiagramm, welches den Aufbau der Stromversorgung mit ausgedehntem Eingangsspannungsbereich illustriert.
Figur 3 zeigt den Verlauf einer ungeglätteten pulsierenden Gleichspannung am Eingangskondensator der Stromversorgung.
Figur 4 zeigt den Verlauf der getakteten Strompulse in der Primärwicklung des Übertragers der Stromversorgung.
Figur 5 zeigt einen ersten, zweiten und dritten Bereich in den ersten 50% einer Halbwelle der ungeglätteten pulsierenden Gleichspannung.
Die Figuren 6a, 6b und 6c zeigen jeweils den Verlauf der getakteten Strompulse, wenn die ungeglättete pulsierende Gleichspannung in einem ersten, zweiten respektive dritten Bereich ist.
Figur 7a zeigt den Verlauf der Oszillatorspannung, die im PWM-Regler erzeugt wird und die die Taktfrequenz der getakteten Strompulse bestimmt.
Figuren 7b, 7d und 7f zeigen jeweils den Verlauf des Messsignals am Messsignaleingang des PWM-Reglers zum Messen der Strompulse, wenn die Oszillatorspannung dem Messsignal aufmoduliert wird und die ungeglättete pulsierende Gleichspannung im ersten, zweiten respektive dritten Bereich ist.
Figuren 7c, 7e und 7g zeigen jeweils den Verlauf der getakteten Strompulse, wenn die Oszillatorspannung dem Messsignal aufmoduliert wird und die ungeglättete pulsierende Gleichspannung im ersten, zweiten respektive dritten Bereich ist.

### Wege zur Ausführung der Erfindung

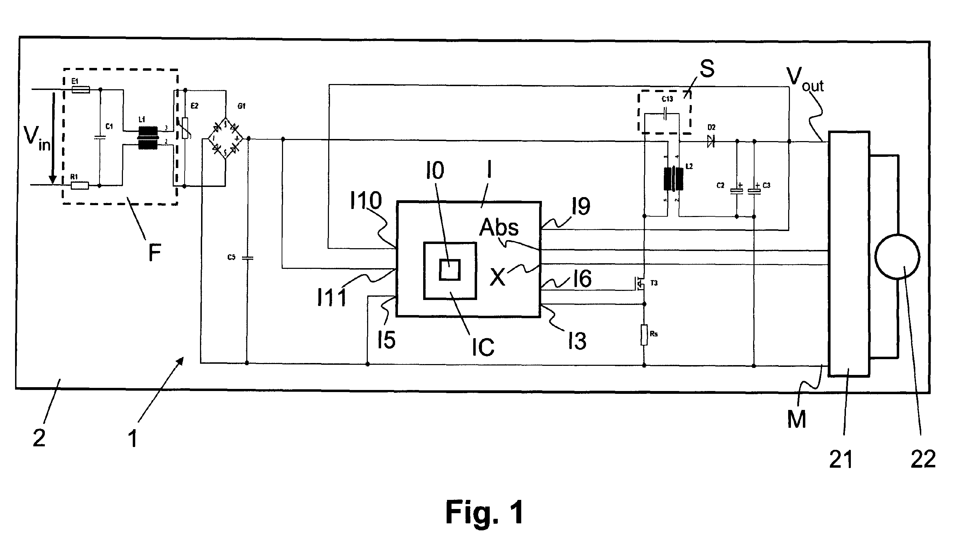

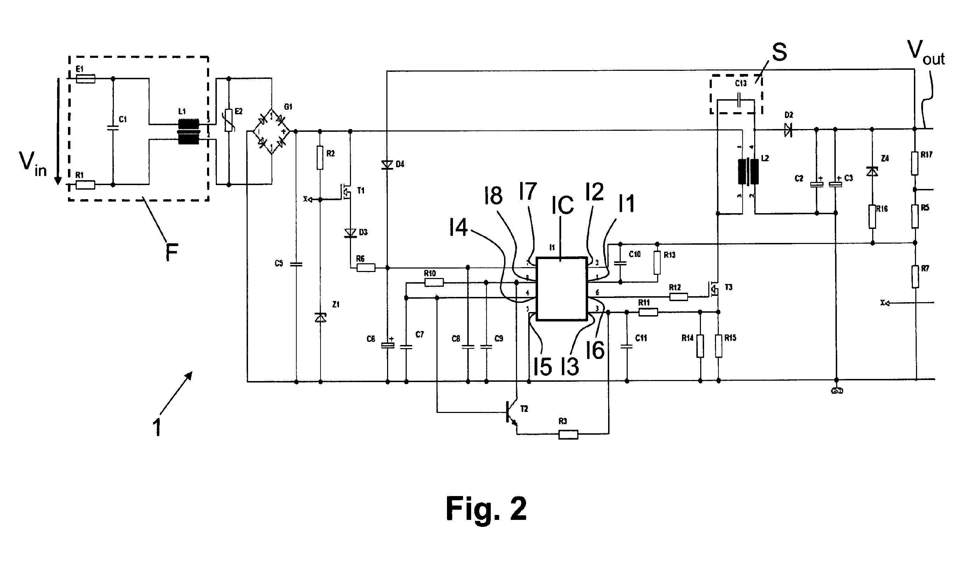

In den Figuren 1 und 2 beziehen sich gleiche Bezugszeichen auf einander entsprechende Komponenten.

In den Figuren 1 und 2 bezeichnet das Bezugszeichen 1 eine Stromversorgung für Antriebe 2, insbesondere für Klappenantriebe, beispielsweise für Federantriebe. Der Antrieb 2 umfasst neben der Stromversorgung eine Motorelektronik 21, z.B. eine Federantriebselektronik, und einen Gleichstrommotor (DC-Motor) 22. Die Stromversorgung 1 erzeugt für einen ausgedehnten Eingangsspannungsbereich mit Eingangsspannungen Vᵢₙ von beispielsweise 24V bis 240V (AC und DC) die DC-Speisung, beispielsweise eine Ausgangsspannung Vₒᵤₜ von 21.5V, die für den Betrieb der Motorelektronik 21 nötig ist. Durch ein Signal der Motorelektronik wird die DC-Speisung reduziert, beispielsweise auf 10.5V, wodurch die Leistung für den Betrieb am Anschlag reduziert wird. Die Motorelektronik 21 erzeugt die Motorspannung für den DC-Motor 22, begrenzt den Motorstrom, beispielsweise auf ca. 200mA, erkennt den Anschlag und liefert nach ca. fünf Sekunden ein Signal an die Stromversorgung zur Reduzierung der DC-Speisung, wodurch beim Anschlag den Motorstrom beispielsweise auf ca. 100mA reduziert wird, und bremst den DC-Motor 22 im Federrücklauf.

Wie in der Figur 1 ersichtlich ist, umfasst die Stromversorgung 1 ein Eingangsfilter F, insbesondere ein RLC-Filter, das durch die Induktivität der Doppeldrossel L1, z.B. 2x220µH, den Kondensator C1, z.B. ein X2 Kondensator mit 220nF, und den Widerstand R1, z.B. 3,3Ω, gebildet wird. Die Stromversorgung 1 ist zum Schutz vor Kurzschlüssen mit einer Sicherung E1 versehen, z.B. eine träge Sicherung für 1,25A. Die Sicherung E1 ist so ausgelegt, dass sie den Strompuls im Einschaltmoment und im Surgetest aushält, im Fehlerfall aber sicher abschaltet. Dem Eingangsfilter F ist ein Gleichrichtermodul G1 nachgeschaltet, beispielsweise eine Diodengleichrichterbrücke. Als Überspannungsschutz ist ein Varistor E2 zwischen den Übertrager L1 und das Gleichrichtermodul G1 geschaltet, z.B. ein Scheibenvaristor S14K275. Dem Gleichrichtermodul G1 ist ein Eingangskondensator C5 nachgeschaltet. Der Eingangskondensator C5 ist kein gross dimensionierter Speicherelektrolytkondensator zur Glättung der gleichgerichteten Spannung, sondern ein Kondensator mit relativ kleiner Kapazität, z.B. ein X2 Folienkondensator von beispielsweise 330nF oder 470nF. Zusammen mit dem Eingangsfilter F verhindert der Eingangskondensator C5, dass die Spannungsquelle, z.B. ein Eingangstransformator, mit hochfrequenten Strompulsen belastet wird.

Die Stromversorgung 1 umfasst einen Current-Mode PWM-Regler I (pulsweitenmodulierter Stromstellregler), z.B. basierend auf dem PWM-Regler IC TL2843B, und ist als Sperrwandler aufgebaut, wobei die Masse M der Ausgangsspannung Vₒᵤₜ mit dem Masseanschluss 15 des PWM-Reglers I verbunden ist. Der PWM-Regler I umfasst einen Taktsignalausgang 16 für ein Taktsignal zum Takten von Strompulsen. Die Taktfrequenz des Taktsignals, z.B. 80kHz, wird durch eine Oszillatorspannung bestimmt, welche durch eine extern beschaltbare Oszillatorschaltung 10 des PWM-Reglers I erzeugt wird. Der PWM-Regler I umfasst zudem einen Messsignaleingang 13 zum Anlegen eines Messsignals der Strompulse. Für die Erzeugung der Strompulse umfasst die Stromversorgung 1 einen Übertrager L2, z.B. 2x220uH, und einen durch das Taktsignal geschalteten Schalter T3, beispielsweise ein Schalttransistor FQB7N80. Beim Einschalten des Schalters T3 wird im Übertrager L2 primärseitig ein Strompuls erzeugt, dessen Energie aus dem Eingangskondensator C5 bezogen wird. Der Strompuls erzeugt über dem Messwiderstand Rₛ ein Spannung, die am Messsignaleingang 13 als Messsignals des Strompulses anliegt.

Die Stromversorgung 1 umfasst überdies ein Snubberglied S, das aus einem Kondensator C13 besteht, der mit der Primärseite und der Sekundärseite des Übertragers L2 verbunden ist.

Um auf der Sekundärseite des Übertragers L2 - und damit auf der Ausgangspannung Vₒᵤₜ - keine zu grossen Spannungseinbrüche zu erleiden, ist auf der Sekundärseite zum Kondensator C2, z.B. 220µF, ein zusätzlicher Speicherkondensator C3, z.B. 470µF, angeordnet.

Eine Spannungsrückkopplung I9 misst die Ausgangspannung Vₒᵤₜ. Die Ausgangsspannung Vₒᵤₜ wird der Arbeitsspannung 110 zugeführt. Eine Aufstartspannung wird an den Eingang I11 angelegt.

In den nachfolgenden Abschnitten wird mit Bezug zu der Figur 2 sowie den Figuren 3, 4, 5, 6a-6c, 7a-7g, die Funktionsweise der Stromversorgung I beschrieben.

Um den PWM-Regler IC beim Aufstarten und Anlaufen über den Eingang 17 mit Spannung zu versorgen umfasst die Stromversorgung 1 eine Aufstartschaltung. Die Aufstartschaltung besteht aus dem Transistor T1, z.B. FQD1N80, Widerstand R2, z.B. 330kΩ, Zenerdiode Z1, Diode D3, Widerstand R6, z.B. 180Ω, Kondensatoren C6 und C8, z.B. 68µF respektive 100nF. Die Aufstartschaltung speist den PWM-Regler IC solange, bis die Sekundärspannung hoch genug ist und über die Diode D4 die Speisung übernimmt. Die Aufstartschaltung übernimmt somit die Speisung nur für eine kurze Zeit und die Verlustleistung über dem Transistor T1, beim Betrieb mit hoher Speisespannung, ist nur von kurzer Dauer. Durch den Widerstand R6 wird der Ladestrom im Kondensator C6 im Aufstartmoment begrenzt, wodurch der Transistor T1 im sicheren Bereich betrieben werden kann.

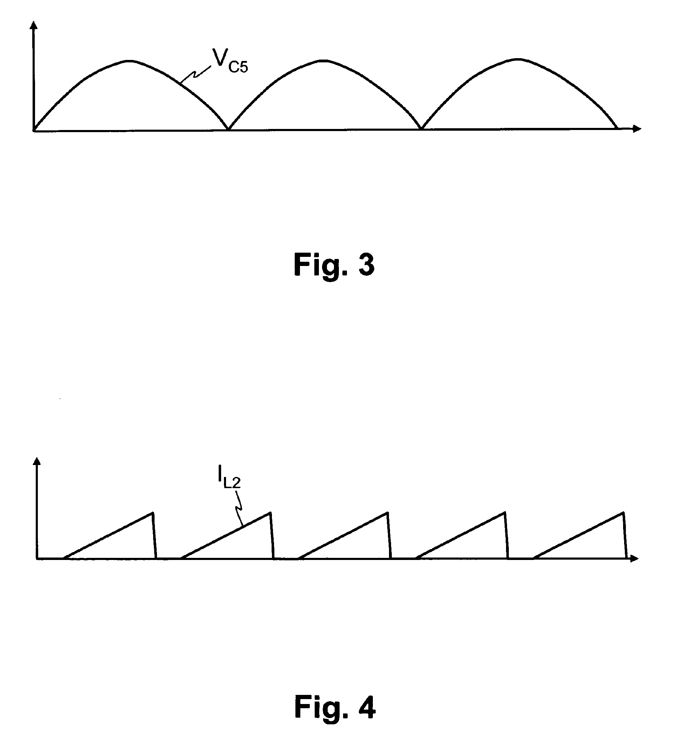

Wie bereits erwähnt ist der Eingangskondensator C5 am Ausgang des Gleichrichtermoduls G1 so klein bemessen, dass die gleichgerichtete Spannung nicht geglättet wird und bei einer Speisung der Stromversorgung 1 mit einer Wechselspannung, über dem Eingangskondensator C5 eine mit der doppelten Frequenz der Wechselspannung pulsierende ungeglättete Gleichspannung V_{C5} gemäss Figur 3 anliegt. Bei einer Speisung mit 50Hz Wechselspannung, liegt über dem Eingangskondensator beispielsweise eine mit 100Hz pulsierende Gleichspannung an.

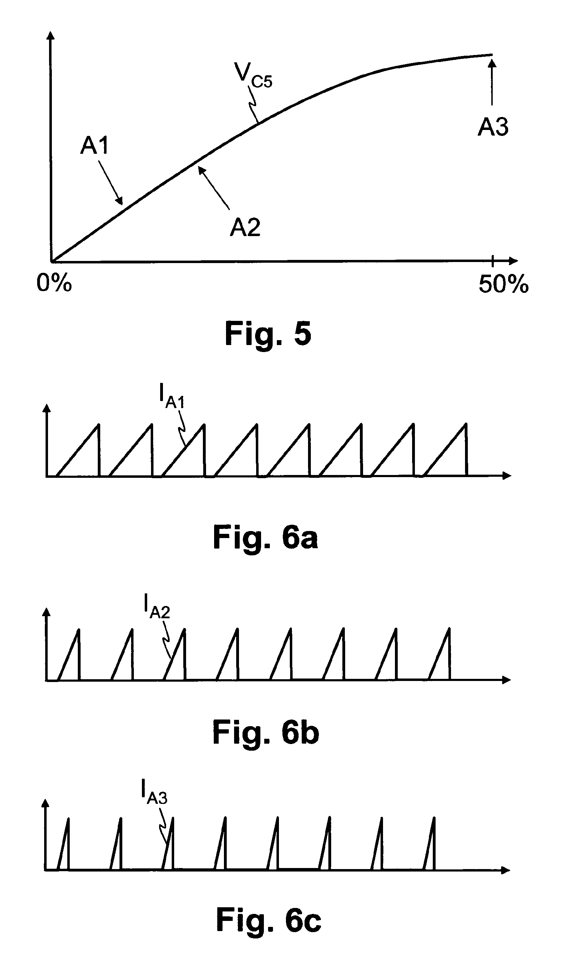

Aus dieser pulsierenden Gleichspannung werden durch das Takten von Schalter T3 Strompulse bezogen. Diese Strompulse werden auf der Primärseite des Übertragers L2 erzeugt und haben den Verlauf I_{L2} gemäss Figur 4. Die Taktfrequenz wird durch den PWM-Regler IC vorgegeben und liegt in der Grössenordnung von beispielsweise 80kHz. Der Schalter T3 wird durch den PWM-Regler IC über den Taktsignalausgang 16 beispielsweise alle 12.5µs eingeschaltet und der Strom in der Primärwicklung des Übertragers L2 steigt rampenförmig an. Die Steilheit dieser Rampe hängt nicht nur von der Induktivität der Primärwicklung des Übertragers L2, sondern auch vom Wert der Spannung ab, die an der Wicklung anliegt. Der Strom wird über den Messwiderstand gemessen, Rs in Figur 1 respektive die entsprechenden Widerstände R14 und R15 in Figur 2. Sobald der Strom einen definierten Wert erreicht hat, schaltet der PWM-Regler IC den Schalter T3 wieder aus. Die an der Primärwicklung anliegende Spannung ist (wenn Schalter T3 eingeschaltet ist) im Wesentlichen die am Eingangskondensator C5 anliegende pulsierende Gleichspannung V_{C5}. Die Steilheit der rampenförmigen Strompulse variiert also im Bereich einer Halbwelle, z.B. eine Halbwelle von 10ms, wie in den Figuren 6a, 6b und 6c beispielhaft für die in der Figur 5 angezeigten Bereiche A1, A2 und A3 in den ersten 50% einer Halbwelle der pulsierende Gleichspannung V_{C5} dargestellt ist. Dabei zeigt Figur 6a den Stromverlauf I_{A1} in der Primärwicklung des Übertragers L2 im Bereich A1 der pulsierenden Gleichspannung V_{C5}; Figur 6b zeigt den Stromverlauf I_{A2} in der Primärwicklung des Übertragers L2 im Bereich A2 der pulsierenden Gleichspannung V_{C5}; und Figur 6c zeigt den Stromverlauf I_{A3} in der Primärwicklung des Übertragers L2 im Bereich A3 der pulsierenden Gleichspannung V_{C5}. Wie in den Figuren 6a, 6b und 6c ersichtlich ist, hängt die Steilheit der Strompulse davon ab, an welcher Stelle der pulsierenden Gleichspannung V_{C5} über C5 gearbeitet wird. Dabei gilt es zu beachten, dass die Taktfrequenz viel höher ist, beispielsweise 80kHz, als die Frequenz der Speisespannung, beispielsweise 50Hz oder 60Hz. Da der PWM-Regler IC den Schalter T3 immer bei einem bestimmten Stromwert ausschaltet, ergeben sich somit ganz unterschiedliche Pulsweiten.

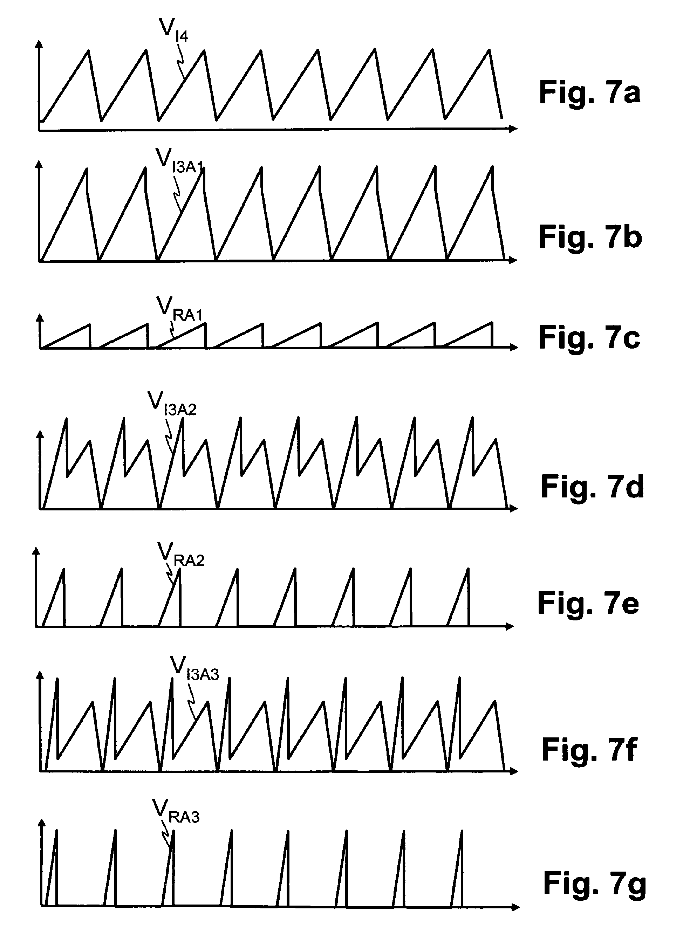

In den nachfolgenden Abschnitten wird mit Bezug zu den Figuren 7a-7g die Funktionsweise und Wirkung der erfindungsgemässen Schaltung beschrieben.

Figur 7a zeigt den Verlauf der Oszillatorspannung V_{I4} am Anschluss 14 des PWM-Reglers IC. Die Oszillatorspannung V_{I4} wird in der Oszillatorschaltung I0 des PWM-Reglers IC durch die externe Beschaltung mit den Widerstand R10, z.B. 4,3kΩ, und dem Kondensator C7, z.B. 4,7nF, erzeugt. Diese Oszillatorspannung V_{I4} definiert die Taktfrequenz, beispielsweise 80kHz.

Durch den Transistor T2, z.B. BC846B; und die Widerstände R3, z.B. 6,8 kΩ, und R11, z.B. 4,7 kΩ, wird die Oszillatorspannung V_{I4} dem Messsignal der Strompulse am Messsignaleingang I3 des PWM-Reglers IC aufmoduliert, der Transistor T2 dient dabei lediglich als Impedanzwandler. Der Schaltungsbereich mit Transistor T2 und den Widerständen R3 und R11 ist für eine sinusförmige Stromaufnahme der Stromspeisung 1 entscheidend.

Durch die Überlagerung der Oszillatorspannung V_{I4} auf das Messsignal der Strompulse wird jeweils erreicht, dass die Strompulse mit dem Anstieg der pulsierenden Gleichspannung V_{C5} am Eingangskondensator C5 grösser werden bzw. beim Sinken der pulsierenden Gleichspannung V_{C5} wieder kleiner werden. Dabei ist die am Messsignaleingang I3 des PWM-Reglers IC anliegende Spannung, welche das Messsignal der Strompulse verkörpert, entscheidend für den Zeitpunkt, wo der Schalter T3 abgeschaltet wird. Der Einfluss der Überlagerung der Oszillatorspannung V_{I4} auf das Messsignal der Strompulse am Messsignaleingang 13 des PWM-Reglers IC wird in den Figuren 7b, 7c, 7d, 7e, 7f und 7g illustriert.

Dabei zeigt die Figur 7c den Spannungsverlauf V_{RA1} über den Widerständen R14 und R15, z.B. jeweils 1,1Ω, wenn die pulsierende Gleichspannung V_{C5} am Eingangskondensator C5 im Bereich A1 ist. Der Spannungsverlauf V_{RA1} über den Widerständen R14 und R15 entspricht dem Stromverlauf der getakteten Strompulse im Bereich A1 der pulsierenden Gleichspannung V_{C5}. Die Figur 7b zeigt den Spannungsverlauf V_{I3A1} am Messsignaleingang I3 im Bereich A1 der pulsierenden Gleichspannung V_{C5}, welcher Spannungsverlauf V_{I3A1} aus der Überlagerung der Oszillatorspannung V_{I4} und dem Spannungsverlauf V_{RA1} über den Widerständen R14 und R15 resultiert. Die Figur 7e zeigt den Spannungsverlauf V_{RA2} über den Widerständen R14 und R15, wenn die pulsierende Gleichspannung V_{C5} am Eingangskondensator C5 im Bereich A2 ist. Der Spannungsverlauf V_{RA2} über den Widerständen R14 und R15 entspricht dem Stromverlauf der getakteten Strompulse im Bereich A2 der pulsierenden Gleichspannung V_{C5}. Die Figur 7d zeigt den Spannungsverlauf V_{I3A2} am Messsignaleingang I3 im Bereich A2 der pulsierenden Gleichspannung V_{C5}. Die Figur 7g zeigt den Spannungsverlauf V_{RA3} über den Widerständen R14 und R15, wenn die pulsierende Gleichspannung V_{C5} am Eingangskondensator C5 im Bereich A3 ist. Der Spannungsverlauf V_{RA3} über den Widerständen R14 und R15 entspricht dem Stromverlauf der getakteten Strompulse im Bereich A3 der pulsierenden Gleichspannung V_{C5}. Die Figur 7f zeigt den Spannungsverlauf V_{I3A3} am Messsignaleingang I3 im Bereich A3 der pulsierenden Gleichspannung V_{C5}. Wie aus den Figuren 7c, 7e und 7g ersichtlich ist nimmt die Grösse der Strompulse mit dem Anstieg der pulsierenden Gleichspannung V_{C5} über die Bereiche A1, A2 und A3 zu. Mit dem Abfall der pulsierenden Gleichspannung V_{C5} nimmt die Grösse der Strompulse entsprechend wieder ab, so dass sich entsprechend dem Anstieg und Abfall der pulsierenden Gleichspannung V_{C5} Strompulse mit sinusförmig an- und absteigender Grösse ergeben. Die Strom pulse werden aus dem Eingangskondensator C5 bezogen, welcher einerseits so klein bemessen ist, dass die pulsierende ungeglättete Gleichspannung V_{C5} gemäss Figur 3 entsteht, und welcher andererseits so gross bemessen ist, dass die Strompulse gespeist werden können, ohne dass seine Spannung zu stark zusammenbricht. Der derart dimensionierte Eingangskondensator C5 und das Eingangsfilter F bewirken, dass aus den sinusförmig an- und absteigenden Strompulsen gemäss den Figuren 7c, 7e und 7g eine im wesentlichen sinusförmige Stromaufnahme durch die Stromversorgung 1 entsteht.

Der Schaltungsbereich mit Transistor T2 und den Widerständen R3 und R11 ist somit für eine sinusförmige Stromaufnahme entscheidend, wobei zur annähernd sinusförmige Stromaufnahme durch die Stromversorgung 1 überdies die geeignet bedämpfte Spannungsrückkopplungsschaltung von der Ausgangsspannung Vₒᵤₜ zum PWM-Regler IC (Eingänge 11 und I2) nötig ist. Die Spannungsrückkopplungsschaltung umfasst den Widerstand R13, z.B. 1MΩ, den Kondensator C 10, z.B. 330nF, sowie die Widerstände R5, R7 und R17, z.B. mit 24kΩ, 7,5kΩ respektive 33kΩ. Ein durch die bedämpfte Spannungsrückkopplungsschaltung bewirktes Überschwingen der Sekundärspannung wird durch die Spannungsbegrenzung mittels der Zenerdiode Z4 und dem Widerstand R16, z.B. 1,1kΩ begrenzt, da der verwendete PWM-Regler IC beispielsweise für maximal 30V ausgelegt ist.

Die Stromspeisung 1 ist überdies so eingerichtet, dass die Ausgangsspannung Vₒᵤₜ durch ein Signal Abs von der Motorelektronik 21 reduziert wird, beispielsweise durch eine Halbierung auf 10,5V. Dadurch wird die Leistung für den Betrieb am Anschlag reduziert. Die Sekundärspannung wird durch Kurzschliessen des Widerstands R17 reduziert. Damit in diesem Betriebszustand nicht wieder die Aufstartschaltung die Speisung des PWM-Reglers IC übernimmt, wird auch Punkt X auf Masse gezogen.

## Patentansprüche

1. Stromversorgung (1) mit ausgedehntem Eingangsspannungsbereich, für Antriebe (2), insbesondere für Klappenantriebe, umfassend:
ein Eingangsfilter (F) mit nachgeschaltetem Gleichrichtermodul (G1),
ein dem Gleichrichtermodul (G1) nachgeschalteter Eingangskondensator (C5), und
ein Current-Mode PWM-Regler (IC), welcher einen Ausgang (16) für ein Taktsignal zum Takten von Strompulsen, eine extern beschaltbare Oszillatorschaltung (10) zur Erzeugung einer die Taktfrequenz bestimmenden Oszillatorspannung (V_{I4}), sowie einen Eingang (13) für ein Messsignal eines Strompulses umfasst,
**dadurch gekennzeichnet,**
**dass** der Eingangskondensator (C5) so bemessen ist, dass bei einer Speisung der Stromversorgung (1) mit einer Wechselspannung, über dem Eingangskondensator (C5) eine mit der doppelten Frequenz der Wechselspannung pulsierende ungeglättete Gleichspannung (V_{C5}) anliegt, und
**dass** der Regler (IC) so beschaltet ist, dass die Taktfrequenz wesentlich höher als die Frequenz der Wechselspannung ist, und dass die Oszillatorspannung (V_{I4}) dem Messsignal des Strompulses aufmoduliert wird.

2. Stromversorgung (1) nach Anspruch 1, **dadurch gekennzeichnet, dass** der Eingangskondensator (C5) so bemessen ist, dass er die Strompulse liefert, ohne dass die Spannung über dem Eingangskondensator (C5) dabei wesentlich einbricht.

3. Stromversorgung (1) nach einem der Ansprüche 1 oder 2, **dadurch gekennzeichnet, dass** der Eingangskondensator (C5) einen Wert im Bereich von 100nF bis 1000nF aufweist.

4. Stromversorgung (1) nach einem der Ansprüche 1 bis 3, **dadurch gekennzeichnet, dass** die Stromversorgung (1) einen durch das Taktsignal geschalteten Schalter (T3) umfasst, der mit einem Übertrager (L2) so verbunden ist, dass jeweils beim Einschalten des Schalters (T3) im Übertrager (L2) primärseitig einer der Strompulse erzeugt wird, dass die Stromversorgung (1) ein aus einem Kondensator (C13) bestehendes Snubberglied (S) umfasst, wobei der Kondensator (C13) des Snubberglieds (S) primärseitig und sekundärseitig mit dem Übertrager (L2) verbunden ist.

5. Stromversorgung (1) nach einem der Ansprüche 1 bis 4, **dadurch gekennzeichnet, dass** die Stromversorgung (1) eine bedämpfte Spannungsrückkopplungsschaltung von der Ausgangsspannung (Vₒᵤₜ) der Stromversorgung (1) zum Regler (IC) aufweist, wobei die Spannungsrückkopplungsschaltung ausgangsseitig mit einer Spannungsbegrenzung beschaltet ist.

6. Stromversorgung (1) nach einem der Ansprüche 1 bis 5, **dadurch gekennzeichnet, dass** die Stromversorgung (1) als Sperrwandler aufgebaut ist, und dass die Masse (M) der Ausgangspannung (Vₒᵤₜ) der Stromversorgung (1) mit der Masse des Reglers (IC) verbunden ist.

7. Stromversorgung (1) nach einem der Ansprüche 1 bis 6, **dadurch gekennzeichnet, dass** über die Ausgangspannung (Vₒᵤₜ) der Stromversorgung (1) ein Speicherkondensator (C3) geschaltet ist.

8. Stromversorgung (1) nach einem der Ansprüche 1 bis 7, **dadurch gekennzeichnet, dass** der Eingangsspannungsbereich 24V bis 240V beträgt, dass die Ausgangsspannung (Vₒᵤₜ) der Stromversorgung (1) eine definierte Gleichspannung im Bereich von 10V bis 30V ist.

9. Antrieb, insbesondere ein Klappenantrieb, mit einer Stromversorgung (1) mit ausgedehntem Eingangsspannungsbereich, wobei die Stromversorgung (1) umfasst:
ein Eingangsfilter (F) mit nachgeschaltetem Gleichrichtermodul (G1),
ein dem Gleichrichtermodul (G1) nachgeschalteter Eingangskondensator (C5), und
ein Current-Mode PWM-Regler (IC), welcher einen Ausgang (16) für ein Taktsignal zum Takten von Strompulsen, eine extern beschaltbare Oszillatorschaltung (10) zur Erzeugung einer die Taktfrequenz bestimmenden Oszillatorspannung (V_{I4}), sowie einen Eingang (13) für ein Messsignal eines Strompulses umfasst,
**dadurch gekennzeichnet,**
**dass** der Eingangskondensator (C5) so bemessen ist, dass bei einer Speisung der Stromversorgung (1) mit einer Wechselspannung, über dem Eingangskondensator (C5) eine mit der doppelten Frequenz der Wechselspannung pulsierende ungeglättete Gleichspannung (V_{C5}) anliegt, und
**dass** der Regler (IC) so beschaltet ist, dass die Taktfrequenz wesentlich höher als die Frequenz der Wechselspannung ist, und dass die Oszillatorspannung (V_{I4}) dem Messsignal des Strompulses aufmoduliert wird.
